# EUROPÄISCHE PATENTSCHRIFT

(11) **EP 1 579 795 B1**
(45) Veröffentlichungstag und Bekanntmachung des Hinweises auf die Patenterteilung: **06.08.2008**
(21) Anmeldenummer: 05405254.3
(22) Anmeldetag: 21.03.2005
(51) Int. Cl.: A47J 37/12

(54) **Garbehälter**
Container for frying
Récipient pour frire

(30) Priorität: 22.03.2004 CH 4772004
(43) Veröffentlichungstag der Anmeldung: 28.09.2005
(73) Patentinhaber: Maurer, Ulrich, 8304 Wallisellen (CH)
(72) Erfinder: Maurer, Ulrich, 8304 Wallisellen (CH)
(74) Vertreter: Walder, Martin Bernhard

(56) Entgegenhaltungen:
- CH-A5- 629 948
- DE-U1- 8 231 081

## Beschreibung

Die Erfindung betrifft einen Garbehälter mit Bratfettaufheizeinrichtung für eine Fritiervorrichtung zum schwimmenden Backen von Lebensmittelportionen und Genussmitteln, insbesondere in Stücken vereinzelter Portionen nach dem Oberbegriff des Patentanspruches 1.

Unter schwimmend backen wird die Aufbereitung von Lebens- oder anderen Genussmitteln (folgend zusammengefasst Lebensmittel genannt) verstanden, die sich dadurch kennzeichnet, dass Lebensmittel in heissem Fett schwimmend gegart, d.h. für den Verzehr geeignet durchbacken werden. Für diese Art der Lebensmittelaufbereitung hat sich auch die Bezeichnung "fritieren", für Vorrichtungen zum Fritieren die der "Friteuse" durchgesetzt, die folgend in der Darstellung der Erfindung Verwendung findet. Friteusen sind insbesondere auf die Aufbereitung von Haufwerken aus vergleichsweise gleich grossen streifenförmigen Stücken ausgerichtet.

Ein häufig zum Verzehr bestimmtes Haufwerk der beschriebenen Art wird aus Kartoffeln gebildet, das für den Verzehr durch Fritieren zubereitet wird. Allgemein bekannt sind solche Haufwerke unter der Bezeichnung "Pommes Frites Portionen".

Bekannt sind Vorrichtungen zur Herstellung von Pommes Frites Portionen, die letztere ausgehend von einem rohen oder vorgebakkenen Haufwerk manuell oder selbsttätig herstellen. Dazu umfasst die bekannte selbsttätige Vorrichtung im wesentlichen einen Vorratsbehälter für ungegarte Pommes Frites und einen Garbehälter (folgend auch Fritiertrommel genannt), wobei der Vorratsbehälter über eine Rohrverbindung mit der Fritiertrommel in Verbindung steht.

Eine im Vorratsbehälter wirkende Schöpfeinrichtung bildet ein Haufwerk vorbestimmter Menge und fördert diese in das Rohr, welches das Haufwerk in die Fritiertrommel leitet. In der Fritiertrommel wird das Haufwerk in heissem Oel durchbacken und danach aus der Fritiertrommel gefördert.

In der flüssiges Bratfett enthaltenden Fritiertrommel dreht ein Wender, der an seinem Umfang radial abragende und in gleicher Teilung am Umfang angeordnete Rechen umfasst, die zur Garung ein Haufwerk durch das heisse Bratfett leiten und anschliessend aus der Vorrichtung austragen. Dabei verbraucht sich das Bratfett und ist deshalb periodisch auszutauschen. Der Austausch erfolgt vermittels eines Ablasshahnes, der das verbrauchte Bratfett aus der Fritiertrommel austrägt, wobei anschliessend die Fritiertrommel stirnseitig wieder aufgefüllt wird. Vor Auffüllung ist die Vorrichtung zu reinigen, was einen grossen Zeit- und Arbeitsaufwand bedeutet, um die Vorrichtung in hygienisch einwandfreiem Zustand zu halten. Es ist die Häufigkeit dieses Zeit- und Arbeitsaufwandes sowie die Kosten für das auszutauschende Bratfett, die die Wirtschaftlichkeit einer Fritiervorrichtung bestimmen.

Die Häufigkeit des Bratfettwechsels hängt stark von der Art der Erwärmung, d.h. Aufheizung und der Homogenität der Wärmeverteilung im Bratfett ab. Bekannt sind Fritiertrommeln mit direkter und indirekter Bratfettaufheizung. Unter direkter Bratfettaufheizung wird die Aufheizung vermittels im Bratfett aufgenommener Heizelemente (Aufheizung innerhalb der Fritiertrommel), unter indirekter Aufheizung die Aufheizung des Bratfettes vermittels einer Durchlaufheizeinrichtung ausserhalb der Fritiertrommel (Aufheizung ausserhalb der Fritiertrommel) verstanden. Aufheizung in einem Behälter unter Erwärmung der Behälterwandungen vermittels Wärmequellen, die auf die Aussenfläche der Behälterwandungen einwirken, fällt auch unter die Klassierung der indirekten Aufheizung.

Bei ersterem Fall der indirekten Aufheizung wird das Backfett oder Fritieröl aus der Trommel abgepumpt durch die Durchlaufheizeinrichtung geleitet und folgend in die Trommel zurückgepumpt. Diese Arten der Aufheizung haben Nachteile. Die direkte Aufheizung bewirkt im flüssigen Bratfett eine Konvektion, d.h. sogenannte Ausgleichsströmungen zur Erzielung einer gleichmässigen Wärmeverteilung im Bratfett. Wird eine Gargutportion in das Bratfett eingebracht, wird die Konvektion und Wärmeverteilung empfindlich gestört und das Gargut unzureichend durchbacken. Diese Konvektionsprobleme treten auch bei der indirekten Aufheizung in einem Behälter, vermittels von aussen auf den Behälter einwirkenden Wärmequellen, auf. Um dem entgegenzuwirken werden Aufheiztemperaturen des Bratfettes höher als eigentlich notwendig, d.h. überhöht eingestellt. Es ist diese überhöhte Aufheizleistung, die massgeblich zur Alterung des Bratfettes und damit vermehrten Häufigkeit des Austausches beiträgt. Bei der Arbeitsweise der indirekten Aufheizung vermittels einer sogenannten Durchlaufheizeinrichtung handelt es sich um ein Umlaufverfahren.

Da eine Pumpe Bratfett aus einer Gartrommel oder einem Garbehälter absaugt, durch die Aufheizeinrichtung führt und der Gartrommel wieder zuführt, sorgt die umlaufende Bratfettmenge für eine gewisse Strömung im Bratfett, die Konvektionsprobleme in den Hintergrund treten lässt. In den Pumpen hingegen sind die flüssigen Bratfette mechanischen Belastungen ausgesetzt, die zur vorzeitigen Alterung und damit zu häufigen Wechseln des Bratfettes führen.

Die Schweizer Patentschrift Nr. 629 948 offenbart eine Fritiervorrichtung mit einem Garbehälter und einer Bratfettaufheizeinrichtung, die als Behältnis nur von Bratfett durchflossen an den Garbehälter zum Garbehälter einends offen anschliesst. In dem Behältnis ist ein hohlzylindrischer Leitmantel mit in seiner Mantelwandung aufgenommenen Heizelementen aufgenommen, wobei ein Strömungsraum zwischen der inneren Wandung des Behältnisses und der äusseren Mantelwandung vorgesehen ist. Mit der bekannten Vorrichtung wird ein beschleunigter Ölumlauf angestrebt, der eine Vergleichmässigung der Bratfetttemperatur im Garbehälter sicherstellen soll. Nachteilig bei dieser bekannten Vorrichtung ist, dass in verflüssigtes Bratfett zu einem beschleunigten Umlauf hohe Wärmemengen einzutragen sind, so dass auch diese Vorrichtung die vorzeitige Bratfettalterung nicht löst.

Aufgabe der vorliegenden Erfindung ist, einen Garbehälter mit Heizung vorzuschlagen, mit dem die Nachteile der bekannten Garbehälter vermieden sind und diese Aufgabe wird durch einen Garbehälter mit den kennzeichnenden Merkmalen des Patentanspruches 1 gelöst. Vorteilhafte Ausgestaltungen des Garbehälters nach Patentanspruch 1 kennzeichnen die Gegenstände, d.h. Merkmale der dem Patentanspruch 1 folgenden Ansprüche.

Weitere Vorteile, Merkmale und Einzelheiten der Erfindung ergeben sich aus der folgenden Beschreibung eines bevorzugten Ausführungsbeispieles und der Zeichnung, es zeigen:
- Fig. 1: eine Bratfettaufheizeinrichtung in einem Garbehälter in der Seitenansicht und im Schnitt,
- Fig. 2: die Darstellung gemäss Fig. 1 in der Draufsicht,
- Fig. 3: die Darstellung gemäss Fig. 1 in der Draufsicht entlang der Schnittlinie A - A in Fig. 1,
- Fig. 4: eine Bratfettaufheizeinrichtung kombiniert mit einem Garbehälter in der Vorderansicht und im Schnitt,
- Fig. 5: eine Draufsicht auf die Bratfettaufheizeinrichtung gemäss Fig. 4 entlang der Schnittlinie A - A in Fig. 4,
- Fig. 6: eine Draufsicht auf die Bratfettaufheizeinrichtung gemäss Fig. 4 entlang der Schnittlinie B - B in Fig. 4,
- Fig. 7: die Bratfettaufheizeinrichtung mit Garbehälter gemäss Fig. 4 in der Seitenansicht.

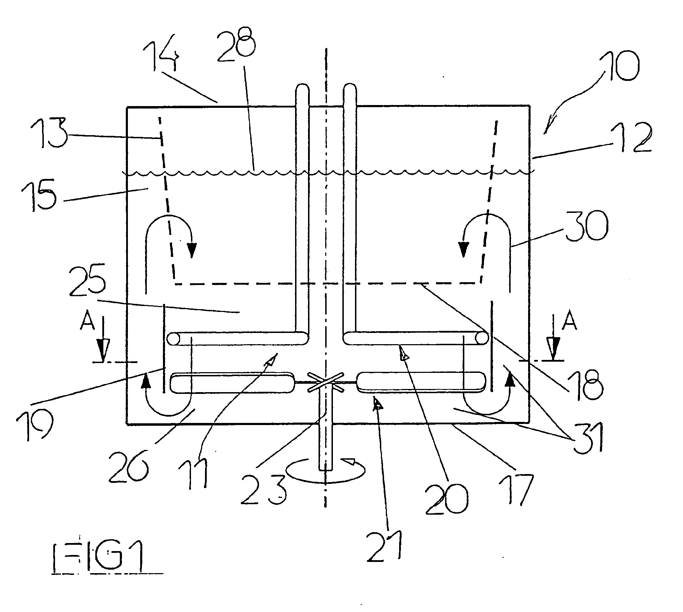

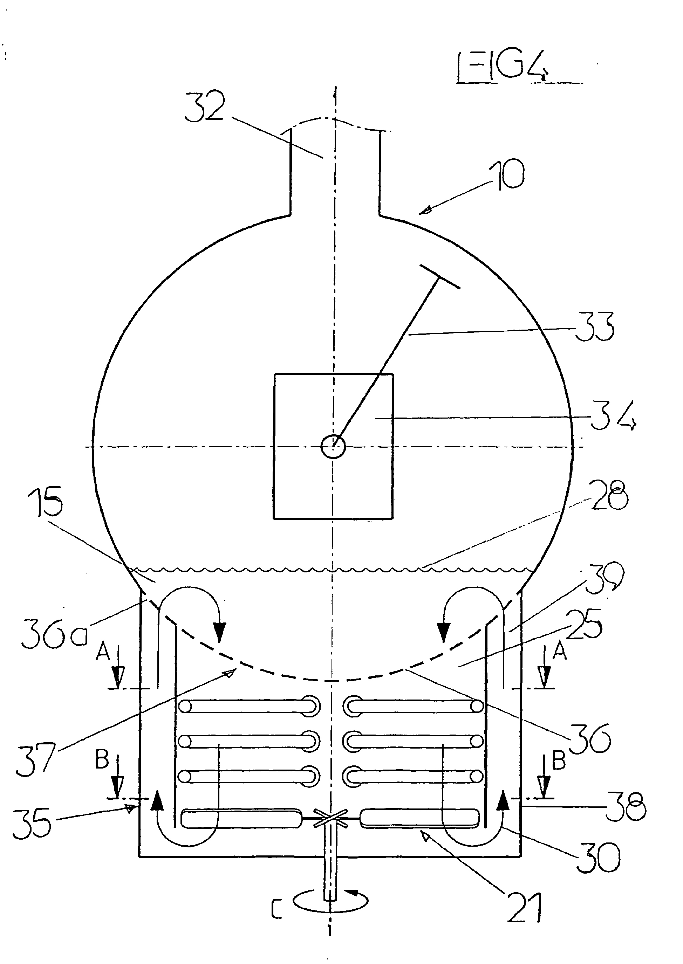

Fig. 1 und Fig. 4 zeigen Garbehälter 10 mit einer nach der Erfindung ausgebildeten Bratfettaufheizeinrichtung 11 (folgend kurz Heizeinrichtung 11 genannt). Unter der Bezeichnung Garbehälter soll jedes Gemäss verstanden werden, dass zur Garung von Lebensmittelportionen, z.B. Pommes Frites Portionen (folgend Gargut genannt), Bratfett 15, z.B. Bratöl, enthält, wobei dem Bratfett 15 wechselnde Wärmeinhalte vermittelbar sind und dass Einrichtungen zur Einbringung und Ausbringung des Gargutes aus dem Gemäss, d.h. dem Bratfett, umfasst. Der Garbehälter 10 gemäss Fig. 1 umfasst als Gemäss einen Topf 12, in dem die Heizeinrichtung 11 und ein Behältnis 13 zur Ein- und Ausbringung von Gargut in Bratfett aufgenommen sind. Das Behältnis 13 ist vorzugsweise ein aus einem Drahtgeflecht gebildeter Korb, durch dessen Wandungsteile das flüssige Bratfett strömen kann und der am oberen offenen Ende 14 des Behältnisses 13 unbefestigt angehängt ist, so dass er in das Bratfett eingebracht und herausgenommen werden kann.

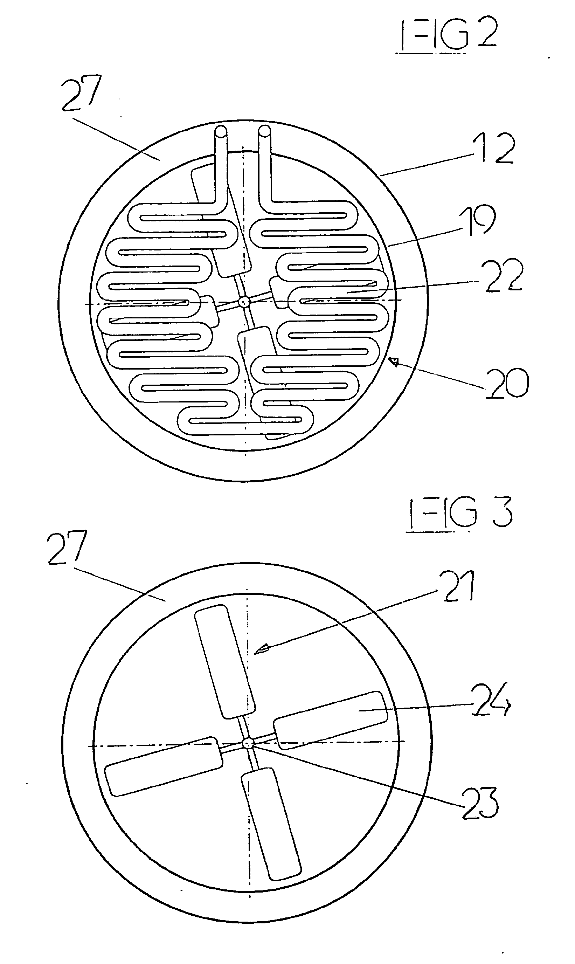

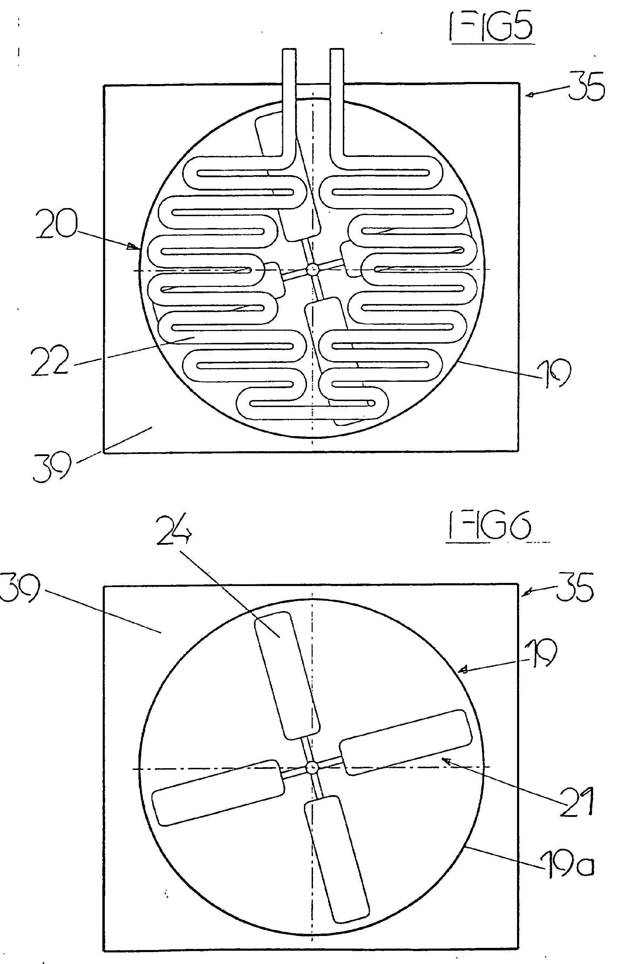

Zwischen dem Boden 17 des Topfes 12 und dem Boden 18 des Behältnisses 13, d.h. dem Korb, ist die Heizeinrichtung 11 angeordnet. Die Heizeinrichtung 11 umfasst einen ringförmigen, zum Boden 17 des Topfes 12 beabstandet angeordneten Strömungsleitmantel 19 (folgend kurz Leitmantel 19 genannt), in dem ein Heizelement 20 und dem Heizelement 20 folgend, d.h. zwischen Heizelement 20 und Boden 17 zum Heizelement 20 beabstandet, eine Förderrichtung 21 aufgenommen sind. Das Heizelement 20 ist ein elektrisch betriebener Heizstab, der schlangenlinienförmig gebogen und im Querschnitt als kreisförmige Scheibe, d.h. rund, ausgestaltet ist. Der äussere Durchmesser des Heizelementes 20 ist so bemessen, dass das Heizelement 20 in den Innenraum des Leitmantels 19 eingebracht werden kann. Die einzelnen Biegungsabschnitte 22 des Heizelementes 20 sind zueinander beabstandet, so dass Bratfett unter Aufnahme von Wärme durch das Heizelement 20 hindurchtreten kann. Die Fördereinrichtung 21 ist als ein von aussen angetriebener Propeller, vorzugsweise mit vier Blättern 24 ausgebildet, der wie das Heizelement 20 im Innenraum des Leitmantels 19 drehbar angeordnet ist. Vorzugsweise können die Propellerblätter 24 zur Drehachse 23 der Fördereinrichtung 21 einen einstellbaren Anstellwinkel (nicht gezeigt) aufweisen, der sich in der Grössenordnung von ein bis zehn Winkelgraden, vorzugsweise vier bis acht Winkelgraden, bewegt. Das Heizelement 20 ist vom oberen Rand (Rand unterhalb des Bodens 18 des Behältnisses 13 oder aufstromseitig) des Leitmantels 19 axial in Richtung auf den unteren Rand (Rand oberhalb des Bodens 17 des Topfes 12 oder abstromseitig) des Leitmantels 19 versetzt, so dass oberhalb des Heizelementes 20 ein Ringraum 25 gebildet ist, der Propeller, d.h. die Fördereinrichtung 21 fällt axial mit dem unteren Rand des Leitmantels 19 zusammen. Da der äussere Durchmesser des Leitmantels 19 kleiner ist als der innere Durchmesser des Topfes 12 und der untere Rand des Leitmantels 12 zum Boden 17 des Topfes beabstandet angeordnet ist, entsteht unter und um den Leitmantel ein Strömungsraum 31, gebildet aus einem flachzylindrischen Bodenraum 26 und einem Steigrohr 27 für die Abfuhr aufgeheizten Bratfettes, das den Leitmantel 19 mit Heizelement 20 und Fördereinrichtung 21 durchlaufen hat. Der Ringraum 25 hat sich für die Gleichmässigkeit der Aufheizung des Bratfettes als vorteilhaft erwiesen. Im Zusammenhang mit den Fig. 1 bis 3 wurden Topf 12, Behältnis 13 und Leitmantel 19 als zylindrisch ausgebildet beschrieben. Auf diese Form ist die Bratfettaufheizeinrichtung 11 jedoch nicht beschränkt. Beispielsweise (siehe Fig. 5 und 6) kann ein Fortsatz 35 für den Strömungsleitmantel 19 mehreckig und der Strömungsleitmantel 19 rund sein. Die Wirkungsweise der erfindungsgemässen Bratfettaufheizeinrichtung 11 ist folgende. Abgekühltes Bratfett 15 wird vom Bratfettvorrat (siehe Niveaulinie 28) durch Gravitation und Absinken, unterstützt durch die Wirkung der angetriebenen Fördereinrichtung 21 (Antrieb nicht gezeigt), durch den Leitmantel 19 geleitet, dabei wird das Bratfett 15 bei Durchlauf des Heizelementes 20 aufgeheizt und von der Fördereinrichtung 21 weiter in Richtung des Bodenraumes 26 bewegt, von wo aus das Bratfett 15, das Steigrohr 27 durchlaufend, aufgrund seines grösseren Wärmeinhaltes und angetrieben durch die Fördereinrichtung 21 in Richtung auf den Bratfettvorrat aufsteigt und sich mit dem kälteren Bratfettvorrat mischt. Schematisch ist dies durch die Strömungspfeile 30 angedeutet. Mit der Ausgestaltung der erfindungsgemässen Bratfettaufheizeinrichtung wird im Bratfett 15 eine sehr homogene Wärmeverteilung erreicht und es ist jede mechanische Belastung vermieden.

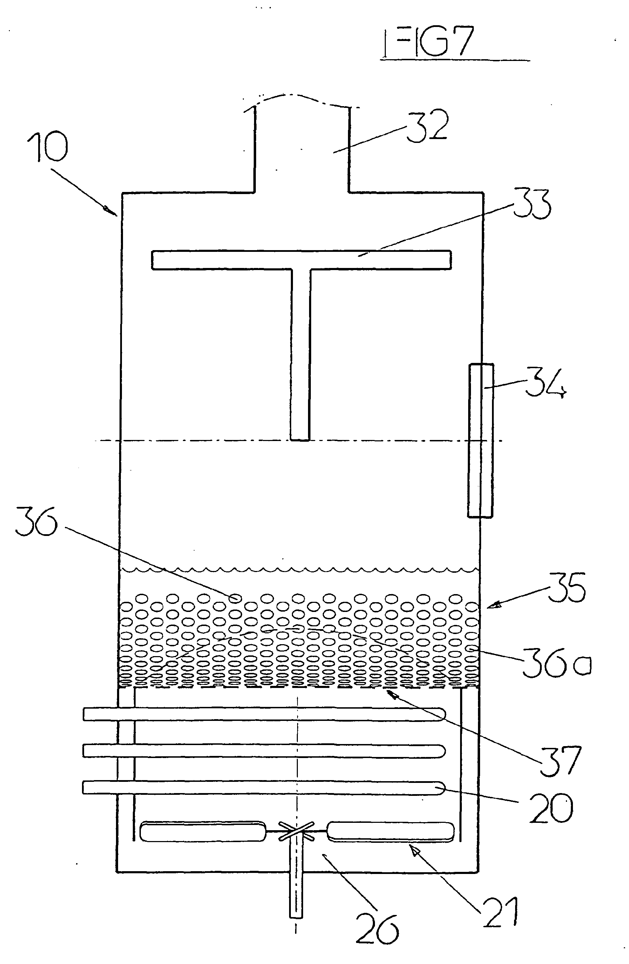

Während die Ausführungsform nach den Fig. 1 bis 3 durch Einsetzen und Herausnehmen des Behältnisses 13, d.h. des Korbes 13 mit Gargut, in das beziehungsweise aus dem Bratfett 15 mehr für manuelle Bedienung ausgelegt ist, stellt die Ausführungsform nach den Fig. 1 bis 7 schematisch einen Garvollautomaten dar. Der Garbehälter 10 ist hier trommelförmig, als liegender Hohlzylinder ausgebildet, in dem das Bratfett 15 aufgenommen ist, in den das Gargut über einen Eintritt 32 gefördert, vermittels eines rotierenden Wenders 33 zur Garung durch das Bratfett 15 bewegt und nach erfolgter Garung über eine Austrittseinrichtung 34 ausgetragen wird. Bezeichnet man den Umfang des Garbehälters 10 mit Eintritt 32 als Oberseite des Garbehälters 10, so ist die Bratfettaufheizeinrichtung 11 nach der Erfindung der Oberseite senkrecht gegenüber an der Unterseite des Garbehälters 10 angebracht. Die Bratfettaufheizeinrichtung 11 nach den Fig. 4 bis 7 besteht aus einem kastenförmigen Fortsatz 35, der im Querschnitt rechteckig ausgebildet ist und bevorzugt die gleiche Länge wie der Hohlzylinder als Garbehälter 10 aufweist. Der Fortsatz 35 ist an der äusseren Umfangswandung des Hohlzylinders angeordnet und der Wandungsteil, der durch den Fortsatz 35 abgedeckt ist, weist Durchtrittsöffnungen 36 auf, durch die Bratfett 15 aus dem Garbehälter 10 in den Leitmantel 19 abwärts gerichtet geleitet, dort aufgeheizt und aufgeheizt aufwärts gerichtet wieder dem Bratfett 15 im Garbehälter 10 zugeleitet werden kann, um anschliessend abgekühlt wieder in den Leitmantel 19 einzutreten. Unterhalb des mit Durchtrittsöffnungen 36 versehenen Wandungsteiles des Garbehälters 10, folgend Siebwand 37 genannt, ist der im Längsschnitt rechteckig ausgebildeten Fortsatz 35 und der runde Strömungsleitmantel 19, beide mit der Siebwand 37 in Eingriff stehend, angeordnet. Der runde Strömungsleitmantel 19 bildet mit seiner Umfangswandung 19a und den senkrechten Wandungen des Fortsatzes 35 einen Förderkanal 39, der einends (abstromseitig) vom Bodenraum 26 aus mit aufgeheiztem Bratfett 15 beschickt wird und das er anderenends (aufstromseitig) durch Durchtrittsöffnungen 36a dem in dem Garbehälter 10 aufgenommenem Bratfett zuleitet. Die Durchtrittsöffnungen 36a dienen im Normalbetrieb der Aufheizeinrichtung 11, überwiegend nur der Zuleitung erhitzten Bratfettes 15, in das Bratfett 15 im Garbehälter 10, d.h. in die Trommel 10, während das erkaltete oder abgekühlte Bratfett 15 durch die Durchtrittsöffnungen 36 in den Innenraum des Leitmantels 19 eintritt. Im Innenraum des Leitmantels 19 sind abstromseitig von der Siebwand 37 mehrere Heizelemente 20 angeordnet und ausgebildet wie im Zusammenhang mit der Ausführungsform nach Fig. 1 bis 3 beschrieben, unter denen, d.h. in Strömungsrichtung gesehen, die Fördereinrichtung 21 angeordnet ist. Die Fördereinrichtung ist im Strömungskanal gleich angeordnet ausgebildet und angetrieben wie in Fig. 1 bis 3 beschrieben.

Der Förderkanal 39 ist im wesentlichen durch den Leitmantel 19 zweigeteilt, wobei die Teile 39a, 39b im Querschnitt im wesentlichen rechteckig mit einer konkaven Wandungsfläche ausgebildet sind. Gezeigt hat sich, dass ein Förderkanal diesen Querschnittes gleich wirkungsvoll erwärmtes Bratfett 15 aufsteigen lässt wie das Steigrohr 27 gemäss Fig. 1. Vorgesehen an den Ausführungsformen nach Fig. 1 und 4 sind auch Einrichtungen zur Konstanthaltung der Brattfettemperaturen (nicht gezeigt), die letztere messen und entsprechend die Heizelemente mit elektrischer Energie beaufschlagen. Diese Einrichtungen können auch so ausgebildet sein, dass sie bei Wartestellung der Fritiervorrichtung die Temperatur des Bratfettes 15 absinken und bei Beschickung ansteigen lassen.

## Patentansprüche

1. Garbehälter (10) mit Bratfettaufheizeinrichtung (11) einer Fritiervorrichtung zum schwimmenden Backen von Lebensmittelportionen und insbesondere in Stücken vereinzelter Portionen mit einem in der Bratfettaufheizeinrichtung (11) aufgenommenem hohlzylindrischen Leitmantel (19), mit darin aufgenommenen Heizelementen (20) und einem über einen Bodenraum (26) mit dem Leitmantel (19) verbundenen Strömungsraum (31), **dadurch gekennzeichnet, dass** in dem Leitmantel (19) abstromseitig der Heizelemente (20) eine Fördereinrichtung (21) in Form eines angetriebenen Propellers mit zur Drehachse (23) der Fördereinrichtung in Anstellwinkeln einstellbaren Propellerblättern (24) vorgesehen ist.

2. Vorrichtung nach Anspruch 1, **dadurch gekennzeichnet, dass** Heizelemente (20) aus elektrisch betriebenen, schlangenförmig zu Biegungsabschnitten (22) verformten Heizstäben gebildet sind.

3. Vorrichtung nch einem der Ansprüche 1 oder 2, **dadurch gekennzeichnet, dass** die Heizelemente (20) als kreisförmige Scheiben ausgebildet sind.

4. Vorrichtung nach einem der Ansprüche 1 bis 3, **dadurch gekennzeichnet, dass** die Biegungsabschnitte (22) zueinander beabstandet sind.

5. Vorrichtung nach einem der Ansprüche 1 bis 4, **dadurch gekennzeichnet, dass** der Leitmantel (19) im Strömungsraum (31) aufgenommen ist.

6. Vorrichtung nach Anspruch 5, **dadurch gekennzeichnet, dass** der Strömungsraum (31) als ein Steigrohr (27) ausgebildet ist.

7. Vorrichtung nach Anspruch 5, **dadurch gekennzeichnet, dass** der Strömungsraum (31) als kastenförmiger, an der Umfangswandung des Garbehälters (10) angeordneter Formsatz (35) und der durch den Fortsatz (35) abgedeckte Teil der Umfangswandung als Siebwand (37) mit Durchtrittsöffnungen (36) für den Eintritt von abgekühltem Bratfett (15) in den Leitmantel (19) und Durchtrittsöffnungen (36a) für die Einleitung aufgeheizten Bratfettes (15) in den Garbehälter (10) ausgebildet ist.

## Claims

1. Cooking vessel (10) comprises a frying fat heating device (11) for the 'floating' frying of food portions and luxury foodstuffs equipped with a frying fat heating device (11) with a hollow cylindrical conduction sleeve (19) with heating elements (20) accommodated within the conduction sleeve (19) and a current space (31) connected with the conduction sleeve (19) via a floor space (26), wherein a conveyance device in the form of a powered propeller with adjustable propeller blades (24) which can be adjusted to a rotational axis (23) of the conveyance device at set angles is located in the conduction sleeve (19) on a down-current side of the heating elements (20).

2. Cooking vessel in accordance with claim 1, wherein the heating elements (20) comprise electrically powered, serpentine-shaped heating rods moulded into bent sections (22).

3. Cooking vessel in accordance with claim 1 or 2, wherein the heating elements (20) comprise circular discs.

4. Cooking vessel in accordance with claim 1 to 3, wherein the bent sections (22) are spaced apart from one another.

5. Cooking vessel in accordance with claim 1 to 4, wherein the conduction sleeve (19) is accommodated in the current space (31).

6. Cooking vessel in accordance with claim 5, wherein the current space (31) comprises a riser pipe (27).

7. Cooking vessel in accordance with claim 5, wherein the current space (31) comprises a box-like appendage (35) located on a circumference wall of the cooking vessel (10), and a part of the circumference wall covered by the appendage (35) forms a filter wall (37) with first access openings (36) for introducing cooled frying fat (15) into the conduction sleeve (19) and second access openings (36a) for introducing heated frying fat (15) into the cooking vessel (10).

## Revendications

1. Récipient pour cuisson (10) avec dispositif de réchauffage de la graisse de cuisson (11) d'une friteuse pour la cuisson flottante de portions d'aliments et en particulier de portions séparées en morceaux avec une enveloppe conductrice (19) cylindrique creuse logée dans le dispositif de réchauffage de la graisse de cuisson (11), avec des éléments de chauffage (20) qui y sont logés et un espace d'écoulement (31) relié par un espace de fond (26) à l'enveloppe conductrice (19), **caractérisé en ce qu'**un dispositif de transport (21) en forme d'hélice entraînée est prévu dans l'enveloppe conductrice (19) du côté de l'évacuation des éléments chauffants (20) avec des pales d'hélice (24) réglables dans des angles d'ajustage par rapport à l'axe de rotation (23) du dispositif de transport.

2. Dispositif selon la revendication 1, **caractérisé en ce que** des éléments de chauffage (20) sont formés par des cartouches chauffantes fonctionnant électriquement, déformées en forme de serpentins en sections de courbure (22).

3. Dispositif selon l'une des revendications 1 ou 2, **caractérisé en ce que** les éléments de chauffage (20) sont configurés comme des disques circulaires.

4. Dispositif selon l'une des revendications 1 à 3, **caractérisé en ce que** les sections de courbure (22) sont espacées l'une de l'autre.

5. Dispositif selon l'une des revendications 1 à 4, **caractérisé en ce que** l'enveloppe de guidage (19) est logée dans l'espace d'écoulement (31).

6. Dispositif selon la revendication 5, **caractérisé en ce que** l'espace d'écoulement (31) est configuré comme un tuyau ascendant (27).

7. Dispositif selon la revendication 5, **caractérisé en ce que** l'espace d'écoulement (31) est configuré comme un prolongement en forme de boîte, placé sur la paroi périphérique du récipient de cuisson (10) et la partie de la paroi périphérique recouverte par le prolongement (35) est configurée comme une paroi perforée (37) avec des ouvertures de passage (36) pour l'entrée de graisse de cuisson refroidie (15) dans l'enveloppe conductrice (19) et des ouvertures de passage (36a) pour l'introduction de graisse de cuisson réchauffée (15) dans le récipient de cuisson (10).
